# EUROPÄISCHE PATENTANMELDUNG

(11) **EP 0 937 688 A2**
(43) Veröffentlichungstag der Anmeldung: **25.08.1999**
(21) Anmeldenummer: 99890047.6
(22) Anmeldetag: 09.02.1999
(51) Int. Cl.: C03B 29/12, C03B 25/093, C03B 35/24, C03B 27/048

(54) **Vorrichtung zum Transportieren und Kühlen von Glasscheiben**

(30) Priorität: 24.02.1998 AT 32698
(71) Anmelder: Lisec, Peter, 3363 Amstetten-Hausmening (AT)
(72) Erfinder: Lisec, Peter, 3363 Amstetten-Hausmening (AT)
(74) Vertreter: Hehenberger, Reinhard, Dipl.-Ing.

(57) **Zusammenfassung**

Eine Vorrichtung zum Transportieren und zum Abkühlen heißer Glasscheiben (10) besitzt eine Stützwand (1), in der abwechselnd stationäre Stützrippen (3) und zwischen jeweils zwei Stützrippen (3) Hohlkammern (4) mit in Richtung senkrecht zur Glasscheibe (10) verstellbaren Wandteilen (11) vorgesehen sind. Beim Transportieren einer Glasscheibe (10) sind die beweglichen Wandteile (11) im wesentlichen mit den freien Rändern (5) der Stützrippen (3) fluchtend ausgerichtet. Beim Transportieren einer Glasscheibe (10) werden die Hohlkammern (4) mit heißer Luft derart beaufschlagt, daß sich zwischen der Glasscheibe (10) und der Stützwand (1) bei auf die Glasscheibe (10) zu vorgeschobenen Wandteilen (11) ein dünner Gaspolster ("L") aus heißer Luft ausbildet.

Beim Abschrecken einer Glasscheibe (10) sind die beweglichen Wandteile (11) auf einen größeren Abstand von der Glasscheibe (10) zurückbewegt. Zum Abschrecken einer Glasscheibe (10) wird bei gegenüber der Glasscheibe (10) zurückbewegten Wandteilen (11) aus den Stützrippen (3) kalte Luft ausgeblasen. Beim Abschrecken wird kalte Luft auch aus einer hohlen, der Stützwand (1) gegenüberliegenden, wandartigen Einrichtung (2) auf die zweite Seite der Glasscheibe (10) geblasen.

## Beschreibung

Die Erfindung betrifft eine Vorrichtung, mit der heiße Glasscheiben, beispielsweise Glasscheiben, die zum Härten auf eine Temperatur über der Härtetemperatur aufgeheizt worden sind, rasch unter die kritische Temperatur abgekühlt werden können, wobei die Vorrichtung auch geeignet sein soll, nicht lotrecht stehend ausgerichtete Glasscheiben in die und aus der Vorrichtung zu transportieren.

Ein Problem bei den bekannten, mit Luftkissen-Transportvorrichtungen (Luftkissenwänden) ausgestatteten Vorrichtungen besteht darin, daß für das rasche Abkühlen (Abschrecken) der Glasscheiben ein vergleichsweise dicker Luftpolster benötigt wird, daß aber ein dicker Luftpolster beim Transportieren der heißen Glasscheibe nachteilig ist. Bei geringem Abstand zwischen der Luftkissenwand und der abzukühlenden Glasscheibe würde beim Abschrecken kalte Luft mit hohem Druck benötigt werden, damit der für das Abschrecken der Glasscheiben erforderliche, hohe Luftdurchsatz, verbunden mit hohen Strömungsgeschwindigkeiten erreicht werden kann. Dies hat sich jedoch als problematisch erwiesen, da die Gefahr besteht, daß die Glasscheibe von der Luftkissenwand durch den Strom kalter Luft von der Luftkissenwand weggedrückt wird.

Der Erfindung liegt die Aufgabe zugrunde, eine Vorrichtung anzugeben, mit der heiße Glasscheiben problemlos transportiert werden können, und wobei diese Vorrichtung auch zum Abschrecken der Glasscheiben herangezogen werden kann.

Erfindungsgemäß wird diese Aufgabe zunächst dadurch gelöst, daß die Vorrichtung die Merkmale des Anspruches 1 aufweist.

Bevorzugte und vorteilhafte Ausgestaltungen der erfindungsgemäßen Vorrichtung sind Gegenstand der Unteransprüche.

Mit der erfindungsgemäßen Vorrichtung können heiße Glasscheibe, die über die kritische Temperatur aufgeheizt worden sind, problemlos transportiert werden, auch wenn die Glasscheiben nicht lotrecht stehend ausgerichtet sind. Grund hierfür ist es, daß durch die in der bei der erfindungsgemäßen Vorrichtung vorgesehenen Stützwand vorgesehenen Stützrippen auch dann ein sicheres Transportieren der heißen Glastafel möglich ist, wenn die zwischen den Stützrippen vorgesehenen Wandteile der Stützwand der erfindungsgemäßen Vorrichtung von der Ebene der Glasscheibe einen größeren Abstand haben, um den für das Abschrecken erforderlichen, dickeren Luftpolster zu gewährleisten. Dabei kann mit der erfindungsgemäßen Vorrichtung so gearbeitet werden, daß beim Transportieren der Glasscheibe durch die Austrittsöffnungen in den zwischen den Stützrippen vorgesehenen Wandteilen der Stützwand der erfindungsgemäßen Vorrichtung heiße Luft ausgeblasen wird, um ein Luftkissen für den Transport der heißen Glasscheibe zu bilden, ohne diese unter die kritische Temperatur abzukühlen.

In einer bevorzugten Ausführungsform der Erfindung ist vorgesehen, daß die Stützrippen in der Stützwand der erfindungsgemäßen Vorrichtung ortsfest angeordnet sind, wogegen die zwischen den Stützrippen angeordneten Wandteile in einer Richtung senkrecht zur Ebene der Stützwand verstellbar sind. Mit dieser Ausführungsform der erfindungsgemäßen Vorrichtung kann beim Transportieren einer heißen Glasscheibe der für den sicheren Transport der Glasscheibe vorteilhafte, dünne Luftpolster zwischen Stützwand und Glasscheibe eingehalten werden, wobei das Luftkissen bevorzugt mit heißer Luft beaufschlagt wird.

Dabei ist es vorteilhaft, wenn heiße Luft insbesondere durch die beweglichen Wandteile, also durch in diesen vorgesehene Öffnungen und gegebenenfalls auch durch die ortsfesten Stützrippen, die zwischen den beweglichen Wandteilen angeordnet sind, in den Bereich zwischen Glasscheibe und Stützwand geleitet wird.

Sobald die Glasscheibe eine Stellung erreicht hat, in der sie zur Gänze in der Vorrichtung, also zur Gänze vor der (Luftkissen-)Stützwand steht, können die beweglichen Wandteile zwischen den Stützrippen zurückgezogen werden. Die Zufuhr heißer Luft wird abgestellt und dann aus den Stützrippen und/oder den beweglichen Wandteilen durch die in diesen vorgesehenen Austrittsöffnungen kalte Luft oder Gas auf die Glasscheibe geblasen, so daß die Glasscheibe, wie für das Härten erforderlich, rasch abgekühlt (abgeschreckt) wird. Beispielsweise werden die beweglichen Wandteile um 20 bis 25 mm gegenüber den stationären Stützrippen von der Glasscheibe wegbewegt.

Von Vorteil kann es sein, wenn die der Glasscheibe zugekehrten Schmalkanten der gegebenenfalls hohl ausgebildeten Stützrippen mit entsprechend wärmebeständigen Kunststoffleisten bestückt sind. Ein hiefür geeigneter Werkstoff ist ein Aramid-Kunststoff (z.B. "Kevlar", Markenname Hersteller: Du Pont).

Da beim Abschrecken Glasscheiben bevorzugt von beiden Seiten her mit kalter Luft beauschlagt werden, können in der erfindungsgemäßen Vorrichtung wenigstens auf beiden Seiten des Bereiches, in dem die Glasscheibe beim Abschrecken steht, Einrichtungen zum Beaufschlagen der Glasscheibe mit kalter Luft vorgesehen sein. Wenigstens eine der beiden Einrichtungen ist dabei wie die erfindungsgemäße Stützwand ausgebildet. Vorteilhaft ist es, wenn der Abstand der beiden Einrichtungen zum Beaufschlagen der Glasscheibe mit Gas oder Luft voneinander verändert werden kann, um den Zwischenraum an die Dicke der abzuschreckenden Glasscheibe anzupassen.

Da für das Transportieren einer heißen Glasscheibe in einer bevorzugten Ausführungsform ein dünner Polster mit heißer Luft oder Gas und beim Abschrecken der Glasscheibe durch Beaufschlagen mit kalter Luft oder Gas ein entsprechend dicker Gaspolster auf beiden Seiten der Glasscheibe ausgebildet werden kann, kann die Glasscheibe beim Abschrecken in der Transportebene bleiben, so daß keine Gefahr besteht, daß sich die Glasscheibe verzieht.

Das Abstützen der Glasscheibe von unten her erfolgt entweder über Förderrollen oder über Förderbänder mit Schlitzen, durch welche die den Gaspolster bildende Luft aus dem Zwischenraum auch nach unten austreten kann.

Weitere Einzelheiten und Vorteile der Erfindung ergeben sich aus der nachstehenden Beschreibung eines bevorzugten Ausführungsbeispieles der Erfindung, das in den Zeichnungen gezeigt ist. Es zeigt:
Fig. 1 schematisch und teilweise eine erfindungsgemäße Vorrichtung in Schrägansicht (teilweise weggebrochen),
Fig. 2 einen Schnitt längs der Linie A-A in Fig. 1 und
Fig. 3 schematisiert und vergrößert eine Einzelheit (Detail B von Fig. 2) der erfindungsgemäßen Vorrichtung beim Antransport (linke Darstellung in Fig. 3) und beim Abschrecken (rechte Darstellung in Fig. 3) der Glasscheibe.

In der beispielhaft gezeigten Ausführungsform sind auf beiden Seiten der Glasscheibe 10 Einrichtungen 1 und 2 zum Beaufschlagen derselben mit heißer und kalter Luft vorgesehen. Wenngleich auf beiden Seiten der Glasscheibe 10 Einrichtungen (Stützwände) 1 gemäß der Erfindung vorgesehen sein können, ist es bevorzugt, daß lediglich die Seite, auf welche hin die Glasscheibe 10 wie beim Transportieren von Glasscheiben üblich, um wenige Grad zur Lotrechten geneigt ist, erfindungsgemäß ausgebildet ist. Die gegenüberliegende Einrichtung 2 zum Beaufschlagen der Glasscheibe 10 mit heißer und kalter Luft kann als gewöhnliche Lochwand ausgebildet sein, deren Abstand von der erfindungsgemäß ausgebildeten Stützwand 1 zum Anpassen an die Dicke der abzuschreckenden Glasscheibe 10 verändert werden kann.

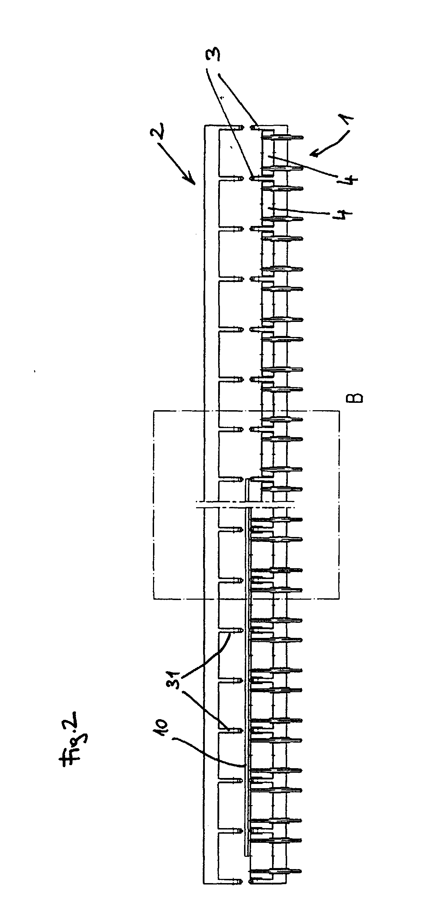

Die Einrichtung 2 kann wie in Fig. 2 gezeigt ausgebildet sein. In diesem Beispiel besitzt die wandartige Einrichtung 2, die der nach oben weisenden Fläche einer Glasscheibe 10 zugeordnet (über dieser angeordnet) ist, eine Hohlkammer 30 und mehrere auf die Glasscheibe 10 bzw. die Stützeinrichtung 1 zu vorstehende Rippen 31. In den Wandteilen 32 der Hohlkammer 30 und in den Seitenwänden der Rippen 31 sind Öffnungen 33 und 34 für den Austritt von heißer Luft (beim Transportieren) und von kalter Luft (beim Abschrecken) vorgesehen. In den freien Rändern 35 der Rippen 31 sind Leisten 36 aus hitzebeständigem Werkstoff (z.B. Kevlar, Markenname) eingesetzt.

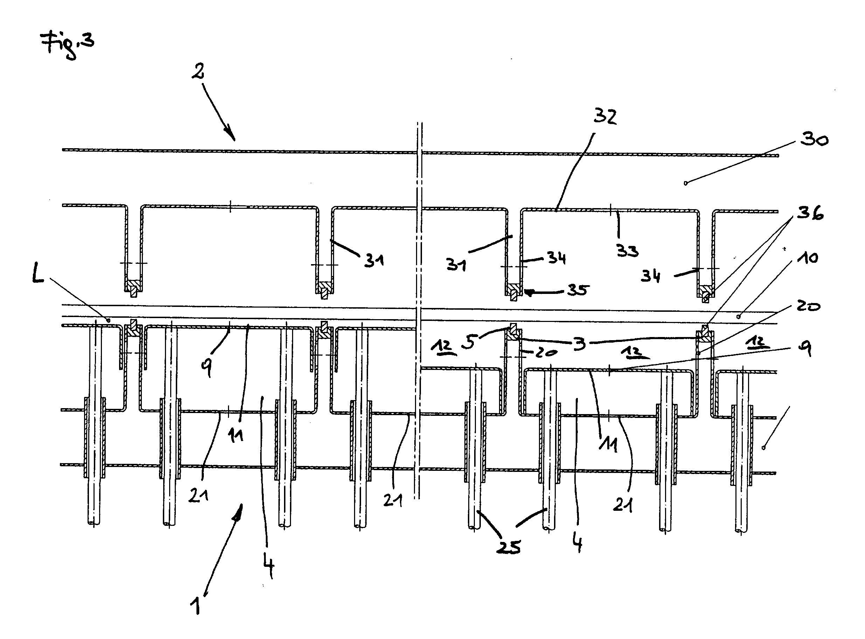

Wie in den Fig. 2 und 3 gezeigt, sind in einer bevorzugten Ausführungsform der erfindungsgemäßen Stützwand 1 zwischen zur Stützwand 1 ortsfest angeordneten, vorzugsweise hohlen Stützrippen 3 Hohlkammern 4 mit beweglichen Wandteilen 11 vorgesehen. Die beweglichen Wandteile 11 der Hohlkammern 4 sind in Richtung senkrecht zur Ebene der Glasscheibe 10 gegenüber den Stützrippen 3 derart beweglich, daß ihr Abstand von der Förderebene der Glasscheibe 10, die durch die der Glasscheibe 10 zugekehrten, freien Ränder (Schmalseiten) 5 der Stützrippen 3 definiert wird, verändert werden kann. Hiezu sind die Wandteile 11 der Hohlkammern 4 mit Gestängen 25 verbunden, die ihrerseits mit (nicht gezeigten) Antrieben (z.B. Druckmittelmotoren) gekuppelt sind.

Die Stützrippen 3 besitzen der Glasscheibe 10 zugewendete Schmalseiten 5, in welchen Leisten 6 aus hitzebeständigem Kunststoff eingesetzt sind. Zusätzlich können in den Schmalseiten 5 der Stützrippen 3 Löcher (Schlitze) für den Austritt von Luft, insbesondere von heißer Luft, vorgesehen sein. Die Leisten 36 aus hitzebeständigem Kunststoff müssen nicht über die gesamte Höhe der Schmalseiten 5 der Stützrippen 3 durchgehen, sondern können unterbrochen sein, wobei die Austrittsöffnungen für heiße Luft im Bereich der Unterbrechungen ausgebildet sein können. Bevorzugt sind durchgehende Leisten 36 und in den Seitenwänden der Stützrippen 3 vorgesehene, vorzugsweise schlitzförmige Austrittsöffnungen 20 für Luft. Die Austrittsöffnungen 20 sind freigegeben, wenn die zwischen Stützrippen 3 angeordneten, beweglichen Wandteile 11 der Hohlkammern 4 zurückgezogen sind (Fig. 3 rechts).

Die Stützrippen 3 sind im Maschinengestell ortsfest montiert und in im wesentlichen lotrechten Ebenen ausgerichtet, wobei die der Glasscheibe 10 zugekehrten Schmalseiten 5 der Stützrippen 3 mit einer lotrechten Ebene beispielsweise einen kleinen Winkel (etwa 5 bis 7°) einschließen, so daß eine über einen Luftpolster (Luftkissen) an der Stützwand 1, die von den Stützrippen 3 und den beweglichen Wandteilen 11 der Hohlkammern 4 gebildet ist, über den Gas- oder Luft; polster ("L") lehnende Glasscheibe 10 wie für das Transportieren von Glasscheiben 10 üblich, mit der Lotrechten einen spitzen Winkel einschließt.

Die Hohlkammern 4 werden über Öffnungen 21 mit Luft beaufschlagt, die durch Öffnungen 9 in den Wandteilen 11 der Hohlkammern 4 austritt.

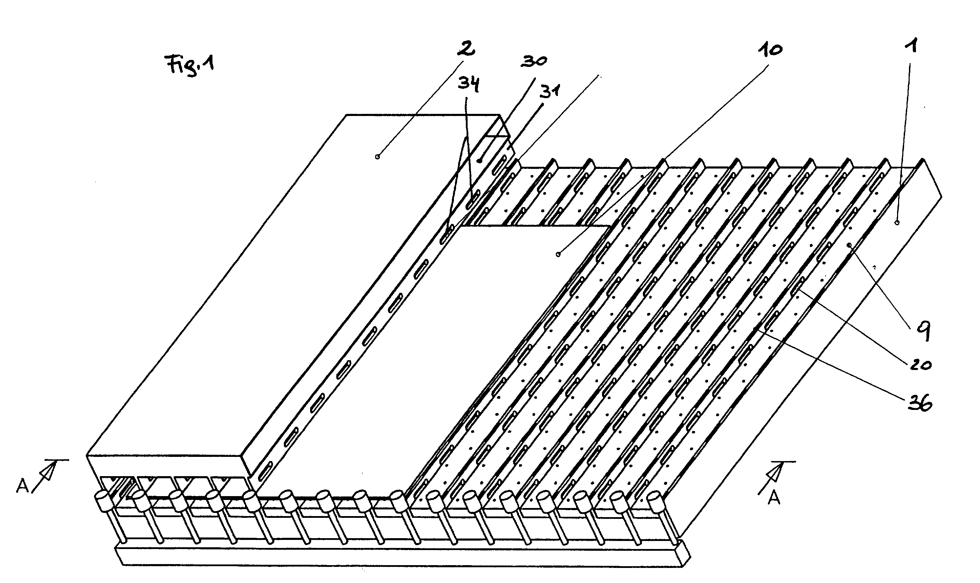

Beim Transportieren einer heißen Glasscheibe 10 wird die (vgl. Fig. 1) Stützwand 1 durch die Hohlkammern 4 und/oder die Stützrippen 3 mit heißer Luft beaufschlagt, so daß sich beim Antransport ein Polster heißer Luft (Luftkissen "L") ausbildet. Falls gewünscht, kann auch durch die Einrichtung 2 heiße Luft auf die sich bewegende Glasscheibe 10 geleitet werden. Der durch die aus den Hohlkammern 4 austretende heiße Luft gespeiste Polster "L" verhindert im übrigen, daß die Glasscheibe 10 - ausgenommen in Ausnahmefällen - mit den Stützrippen 3 oder deren Kunststoffleisten 36 in Berührung kommt. Dabei ist in erster Linie daran gedacht, heiße Luft zur Ausbildung des Gaspolsters "L" lediglich über die Hohlkammern 4 auszubringen, nicht aber durch die hohl ausgebildeten Stützrippen 3.

Sobald eine Glasscheibe 10 zur Gänze der Stützwand 1 gegenüberliegend angeordnet ist, werden die beweglichen Wandteile 11 der Hohlkammern 4 gegenüber den stationären Stützrippen 3 von der Glasscheibe 10 weg (beispielsweise etwa 20 bis 25 mm) zurückgezogen. Die Stützrippen 3 werden mit kalter Luft beaufschlagt, die durch Austrittsöfnungen 20 aus den Stützrippen 3 austritt. Dabei liegen, wie in Fig. 3 rechts gezeigt, zwischen der Glasscheibe 10 und den Stützrippen 3 sowie den der Glasscheibe 10 zugekehrten Wandteilen 11 der Hohlkammern 4 große Kammern 12 vor, die mit kalter Luft beaufschlagt sind. Gleichzeitig wird die von der Stützwand 1 abgewendete Seite der Glasscheibe 10 durch die Einrichtung 2 mit kalter Luft beaufschlagt, so daß die Glasscheibe 10 von beiden Seiten her, also gleichmäßig und rasch abgekühlt, also abgeschreckt wird.

Es ist auch möglich, kalte Luft nur durch die Stützrippen 3, oder nur durch die Hohlkammern 4 oder aber sowowhl durch die Stützrippen 3 als auch durch die Hohlkammern 4 zuzuführen.

Bei einer Ausführungsform der erfindungsgemäßen Wand 1 mit ortsfest zwischen den ortsfesten Stützrippen 3 angeordneten Wandteilen 11 der Hohlkammern 4 haben diese von der Förderebene einer Glastafel 10 einen größeren Abstand, z.B. einen um 20 bis 25 mm größeren Abstand, als die Schmalseiten 5 der Stützrippen 3.

Zusammenfassend kann ein bevorzugtes Ausführungsbeispiel der erfindungsgemäßen Vorrichtung zum Transportieren und Abkühlen von Glasscheiben wie folgt beschrieben werden:

Eine Vorrichtung zum Transportieren und zum Abkühlen heißer Glasscheiben 10 besitzt eine Stützwand 1, in der abwechselnd ortsfeste Stützrippen 3 und zwischen jeweils zwei Stützrippen 3 Hohlkammern 4 mit Wandteilen 11, die in Richtung senkrecht zur Glasscheibe 10 verstellbar sind, vorgesehen sind. Beim Transportieren einer Glasscheibe 10 sind die beweglichen Wandteile 11 im wesentlichen mit den freien Rändern 5 der Stützrippen 3 fluchtend ausgerichtet. Beim Transportieren einer Glasscheibe 10 werden die Hohlkammern 4 mit heißer Luft derart beaufschlagt, daß sich zwischen der Glasscheibe 10 und der Stützwand 1 bei auf die Glasscheibe 10 zu vorgeschobenen Wandteilen 11 ein dünner Gaspolster "L" aus heißer Luft ausbildet.

Beim Abschrecken einer Glasscheibe 10 sind die beweglichen Wandteile 11 auf einen größeren Abstand von der Glasscheibe 10 zurückbewegt. Zum Abschrecken einer Glasscheibe 10 wird bei gegenüber der Glasscheibe 10 zurückbewegten Wandteilen 11 aus den Stützrippen 3 kalte Luft ausgeblasen. Beim Abschrecken wird kalte Luft auch aus einer hohlen, der Stützwand 1 gegenüberliegenden, wandartigen Einrichtung 2 auf die zweite Seite der Glasscheibe 10 geblasen.

## Patentansprüche

1. Vorrichtung zum Transportieren und zum Abkühlen heißer Glasscheiben (10) mit zu beiden Seiten der Glasscheibe (10) angeordneten Wänden (1, 2), aus welchen beim Transportieren einer Glasscheibe (10) heiße Luft und beim Abkühlen einer Glasscheibe (10) kalte Luft oder ein anderes kaltes Gas auf die Glasscheibe (10) geleitet wird, dadurch gekennzeichnet, daß wenigstens eine der Wände als Stützwand (1) ausgebildet ist, in der abwechselnd Stützrippen (3) und zwischen jeweils zwei benachbarten Stützrippen (3) Wandteile (11) vorgesehen sind, daß die Stützrippen (3) weiter in Richtung auf die Glasscheibe (10) vorstehen als die zwischen den Stützrippen (3) vorgesehenen Wandteile (11), und daß wenigstens in den Wandteilen (11) Austrittsöffnungen (9) für heiße bzw. kalte Luft oder Gas vorgesehen sind.

2. Vorrichtung nach Anspruch 1, dadurch gekennzeichnet, daß sowohl die Stützrippen (3), als auch die Wandteile (11) mit Austrittsöffnungen (9, 20) für heiße und kalte Luft oder Gas ausgebildet sind.

3. Vorrichtung nach Anspruch 1 oder 2, dadurch gekennzeichnet, daß die Stützrippen (3) als hohle Rippen ausgebildet sind.

4. Vorrichtung nach Anspruch 3, dadurch gekennzeichnet, daß in den zur Glasscheibe (10) annähernd senkrechten Seitenwänden der hohlen Stützrippen (3) Austrittsöffnungen (20) vorgesehen sind.

5. Vorrichtung nach Anspruch 4, dadurch gekennzeichnet, daß die Austrittsöffnungen (20) der Stützrippen (3) als Langschlitze ausgebildet sind.

6. Vorrichtung nach einem der Ansprüche 1 bis 5, dadurch gekennzeichnet, daß in den Schmalseiten (5) der Stützrippen (3) Leisten (36) aus elastischem, hitzebeständigem Werkstoff eingesetzt sind.

7. Vorrichtung nach Anspruch 6, dadurch gekennzeichnet, daß die Leisten (36) aus elastischem Werkstoff über die Länge der Stützrippen (3) durchgehend ausgebildet sind.

8. Vorrichtung nach einem der Ansprüche 1 bis 7, dadurch gekennzeichnet, daß die Stützrippen (3) in der Stützwand (1) ortsfest angeordnet sind und daß die zwischen den Stützrippen (3) angeordneten Wandteile (11) in Richtung senkrecht zur Ebene der Stützwand (1) verstellbar sind.

9. Vorrichtung nach einem der Ansprüche 1 bis 8, dadurch gekennzeichnet, daß die zwischen den Stützrippen (3) vorgesehenen Wandteile (11) der Glasscheibe (10) zugekehrte Wände von Kammern (4) sind, die hohl ausgebildet sind.

10. Vorrichtung nach Anspruch 9, dadurch gekennzeichnet, daß die der Glasscheibe (10) zugekehrten Wände der hohlen Kammern (4) die in Richtung senkrecht zur Ebene der Glasscheibe (10) verstellbaren Wandteile (11) sind.

11. Vorrichtung nach einem der Ansprüche 8 bis 10, dadurch gekennzeichnet, daß beim Transportieren einer Glasscheibe (10) die beweglichen Wandteile (11) mit ihrer der Glasscheibe (10) zugekehrten Seite im wesentlichen mit den Schmalseiten (5) der Stützrippen (3) fluchtend ausgerichtet sind.

12. Vorrichtung nach einem der Ansprüche 8 bis 11, dadurch gekennzeichnet, daß zum Abkühlen einer Glasscheibe (10) die beweglichen Wandteile (11) gegenüber den Schmalseiten (5) der Stützrippen (3) auf einen größeren Abstand von der Glasscheibe (10) zurückversetzt sind.

13. Vorrichtung nach einem der Ansprüche 10 bis 12, dadurch gekennzeichnet, daß beim Transportieren einer Glasscheibe (10) die hohlen Kammern (4) mit heißer Luft derart beaufschlagt sind, daß zwischen der Glasscheibe (10) und der Stützwand (1) bei auf die Glasscheibe (10) zu vorgeschobenen Wandteilen (11) ein Gaspolster (L) aus heißer Luft ausgebildet wird.

14. Vorrichtung nach einem der Ansprüche 8 bis 13, dadurch gekennzeichnet, daß zum Abkühlen einer Glasscheibe (10) die beweglichen Wandteile (11) gegenüber der Glasscheibe (10) zurückversetzt sind und aus den Stützrippen (3) kalte Luft ausgeblasen wird.

15. Vorrichtung nach einem der Ansprüche 8 bis 14, dadurch gekennzeichnet, daß zum Abkühlen einer Glasscheibe (10) die beweglichen Wandteile (11) gegenüber der Glasscheibe (10) zurückversetzt sind und aus den hohlen Kammern (4) kalte Luft ausgeblasen wird.

16. Vorrichtung nach einem der Ansprüche 8 bis 15, dadurch gekennzeichnet, daß die Stützrippen (13) in Vertikalebenen, die senkrecht zur Förderebene der Glasscheibe (10) ausgerichtet sind, angeordnet sind, wobei die Schmalseiten (5) der Stützrippen (3) mit der Lotrechten einen spitzen Winkel einschließen.
